# EUROPEAN PATENT APPLICATION

(11) **EP 3 505 407 A1**
(43) Date of publication of application: **03.07.2019**
(21) Application number: 18210310.1
(22) Date of filing: 05.12.2018
(51) Int. Cl.: B60T 8/1755

(54) **VEHICLE BEHAVIOR CONTROL DEVICE**

(30) Priority: 27.12.2017 JP 2017250456
(71) Applicant: Mazda Motor Corporation, Aki-gun, Hiroshima 730-8670 (JP)
(72) Inventor: SUNAHARA, Osamu, Hiroshima 730-8670 (JP); UMETSU, Daisuke, Hiroshima 730-8670 (JP); TAKAHARA, Yasunori, Hiroshima 730-8670 (JP); FUJISHITA, Hirofumi, Hiroshima 730-8670 (JP); TSUMURA, Kazunori, Hiroshima 730-8670 (JP)
(74) Representative: Müller-Boré & Partner Patentanwälte PartG mbB

(57) **Abstract**

The vehicle behavior control device comprised a drive control system 4 and a brake control system 18, wherein a PCM 14 is configured, when steering angle is increasing, to set an additional deceleration to be added to the vehicle, and control the drive control system 4 to attain the additional deceleration, and, when the steering angle is decreasing, to set a yaw moment oriented in a direction opposite to that of a yaw rate being generated in the vehicle, as a target yaw moment to be applied to the vehicle, and control the brake control system 18 to apply the target yaw moment to the vehicle. Particularly, when the steering angle is 0, PCM 14 is configured to set the target yaw moment to 0 so as to terminate the control via the brake control system 18.

## Description

### BACKGROUND OF THE INVENTION

### Field of the Invention

The present invention relates to a vehicle behavior control device and more particularly to a vehicle behavior control device comprising a drive means configured to output a torque for driving drive road wheels of a vehicle, and a braking means capable of applying different braking forces, respectively, to right and left road wheels of the vehicle.

### Description of Related Art

Heretofore, there has been known a control device capable of, in a situation where the behavior of a vehicle becomes unstable due to road wheel slip or the like, controlling the vehicle behavior to enable a safe traveling (e.g., an antiskid brake device). Specifically, there has been known a control device operable to detect the occurrence of vehicle understeer or oversteer behavior during vehicle cornering or the like, and apply an appropriate degree of deceleration to one or more road wheels so as to suppress such a behavior.

As a different type of control from the above control for improving safety in a traveling condition causing the vehicle behavior to become unstable, there has been known a vehicle motion control device operable to automatically perform acceleration or deceleration of a vehicle in association with the manipulation of a steering wheel which is started from a usual driving region, to thereby reduce skid in a marginal driving region, (see JP-A-2010-162911 (Patent Document 1), for example). Particularly, in this Patent Document 1, there are disclosed a vehicle motion control device having a first mode for controlling acceleration and deceleration in a forward-rearward (longitudinal) direction of the vehicle, and a second mode for controlling the yaw moment of the vehicle.

### BRIEF SUMMURY OF THE INVENTION

### Technical Problem

The control to be executed in the first mode (this control will hereinafter be appropriately referred to as "first control") as described in the Patent Document 1 is typically configured to add a deceleration to a vehicle when steering angle is increasing (i.e., when turning manipulation of a steering wheel is being performed). On the other hand, the control to be executed in the second mode (this control will hereinafter be appropriately referred to as "second control") as described in the Patent Document 1 is typically configured to add, to the vehicle, a yaw moment oriented in a direction opposite to that of a yaw rate being generated in the vehicle when the steering angle is decreasing (i.e., when turning-back manipulation of the steering wheel is being performed). In the Patent Document 1, the first control is called "G-Vectoring control", and the second control is called "antiskid control".

Here, for example, when a vehicle travels along an S-shaped curve, there is the following tendency: first of all, the first control is executed during an increase in steering angle (during the turning manipulation), and then the second control is executed during a decrease in steering angle (during the turning-back manipulation), whereafter the first control is further executed during an increase in steering angle (during the turning manipulation). In this situation, when the steering manipulation is switched from the turning-back manipulation to the turning manipulation, i.e., when the steering angle changes across 0, it is desirable that the control mode is adequately switched from the second control to the first mode. However, there is a possibility that both of the first and second controls are executed when the steering angle is around 0. That is, if the second control is continued to be executed even after the steering angle has changed across 0, the first control will be additionally executed in the state in which the second control is executed.

If both of the first and second controls are concurrently executed as mentioned above, control intervention becomes excessive in the entire vehicle, which is likely to give a driver a feeling of strangeness. For example, in an S-shaped curve, when the steering wheel is turned back in a clockwise direction from a counterclockwisely manipulated state, the second control is executed to apply a yaw moment to the vehicle so as to cause the vehicle to be turned in a straight-ahead direction, i.e., make it easy for the vehicle to be turned in the clockwise direction. Subsequently, when the steering wheel is turned in the clockwise direction across a neutral position of the steering wheel (where the steering angle is 0), the first control is executed to apply a deceleration to the vehicle so as to make it easy for the vehicle to be turned in the clockwise direction. In such a series of situations, if the first control is additionally executed in the course of execution of the second control, control for turning the vehicle in the clockwise direction will be doubly applied, so that the vehicle is likely to become an oversteered state in a clockwise curve.

The present invention has been made in view of solving the above conventional problem, and an object thereof is to enable a vehicle behavior control device for executing control of applying a deceleration to a vehicle when steering angle is increasing, and control of applying a yaw moment to the vehicle when the steering angle is decreasing, to suppress a situation where control intervention becomes excessive in the entire vehicle.

### Solution to Problem

In order to achieve the above object, the present invention provides a vehicle behavior control device including a drive means operable to output a torque for driving road wheels of the vehicle, and a braking means capable of applying different braking forces, respectively, to right and left road wheels of the vehicle, the vehicle behavior control device including: a steering wheel configured to be manipulated by a driver; a steering angle detecting means configured to detect a steering angle of the steering wheel; a drive controlling means configured, when the steering angle is increasing, to set an additional deceleration to be added to the vehicle, and reduce the output torque of the drive means so as to attain the additional deceleration; a target yaw moment setting means configured, when the steering angle is decreasing, to set a yaw moment oriented in a direction opposite to that of a yaw rate being generated in the vehicle, as a target yaw moment to be applied to the vehicle; and a brake controlling means configured to control the braking means to apply the target yaw moment to the vehicle, wherein, when the steering angle is 0, the target yaw moment setting means is configured to set the target yaw moment to 0 so as to terminate the application of the target yaw moment to the vehicle.

In the vehicle behavior control device of the present invention having the above feature, when the steering angle is 0, the target yaw moment is set to 0, so that, when the steering manipulation is switched from the turning-back manipulation to the turning manipulation, i.e., when the steering angle changes across 0, during traveling along an S-shaped curve or the like, the application of the yaw moment to the vehicle by the second control can be adequately terminated. Therefore, it is possible to suppress a situation where the second control is continued to be executed even after the steering angle has changed across 0, and thereby the first control is additionally executed in the state in which the second control is executed. As a result, it is possible to suppress a situation where control intervention becomes excessive in the entire vehicle, resulting in giving a driver a feeling of strangeness.

Preferably, in the vehicle behavior control device of the present invention, the target yaw moment setting means is configured to reduce the target yaw moment toward 0, along with a decrease in the steering angle.

According to this feature, the target yaw moment is reduced toward 0 along with a decrease in the steering angle, so that it is possible to suppress a situation where, due to sudden stop of the application of the yaw moment to the vehicle, vehicle behavior is largely changed, resulting in giving a driver a feeling of strangeness.

Preferably, in the vehicle behavior control device of the present invention, the target yaw moment setting means is configured to set a reference value regarding the target yaw moment according to a value representing a vehicle-turning state, which can be obtained based on the steering angle, and the target yaw moment setting means is configured to calculate the target yaw moment by multiplying the reference value by a gain according to the steering angle, so as to apply the target yaw moment to the vehicle, and a value of 1 or less according to the steering angle is set as the gain, and the gain becomes 0 when the steering angle is 0.

According to this feature, it is possible to adequately attain the operation of terminating the second control when the steering angle is 0, without modifying a logic for setting the target yaw moment according to the value representing the vehicle-turning state and simply by additionally performing the processing of multiplying the reference value of the target yaw moment obtained through the logic by the gain. That is, termination of the application of the yaw moment to the vehicle can be attained reliably and simply.

More preferably, in the above vehicle behavior control device, the value representing the vehicle-turning state is a change rate of a difference between an actual yaw rate being actually generated in the vehicle and a target yaw rate calculated based on the steering angle.

According to this feature, for example, in a situation where the steering wheel is manipulated on a low-µ road such as a compacted snow road, a yaw moment oriented to suppress turning of the vehicle can be applied to the vehicle immediately in response to a rapid change in the yaw rate difference due to a response delay (lag) of the actual yaw rate, so that it is possible to quickly stabilize the vehicle behavior in response to the steering manipulation by a driver, before the vehicle behavior becomes unstable.

Alternatively, the value representing the vehicle-turning state may be a steering speed calculated based on the steering angle.

According to this feature, a yaw moment having a magnitude according to the speed of the steering manipulation by a driver can be applied to the vehicle in a direction enabling the yaw moment to suppress turning of the vehicle, so that it is possible to quickly stabilize the vehicle behavior in response to the steering manipulation by the driver.

The present invention makes it possible to enable the vehicle behavior control device for executing control of applying a deceleration to a vehicle when steering angle is increasing, and control of applying a yaw moment to the vehicle when the steering angle is decreasing, to suppress the situation where control intervention becomes excessive in the entire vehicle.

### BRIEF DESCRIPTION OF THE SEVERAL VIEWS OF THE DRAWINGS

FIG. 1 is a block diagram depicting an overall configuration of a vehicle equipped with a vehicle behavior control device according to one embodiment of the present invention.
FIG. 2 is a block diagram depicting an electrical configuration of the vehicle behavior control device according to this embodiment.
FIG. 3 is a flowchart of a behavior control processing routine to be executed by the vehicle behavior control device according to this embodiment.
FIG. 4 is a flowchart of an additional deceleration setting processing subroutine through which the vehicle behavior control device according to this embodiment sets an additional deceleration.
FIG. 5 is a map indicating a relationship between a steering speed and the additional deceleration.
FIG. 6 is a flowchart of a target yaw moment setting processing subroutine through which the vehicle behavior control device according to this embodiment sets a target yaw moment.
FIG. 7 is a map defining a gain for use in setting the target yaw moment in this embodiment.
FIG. 8 is an explanatory diagram regarding a pressure reduction characteristic of brake fluid pressure in a brake unit.
FIG. 9 depicts time charts indicating temporal changes in various parameters pertaining to behavior control, as measured when the vehicle equipped with the vehicle behavior control device according to this embodiment is driven along an S-shaped curve.

### DETAILED DESCRIPTION OF THE INVENTION

With reference to the accompanying drawings, a vehicle behavior control device according to one embodiment of the present invention will now be described.

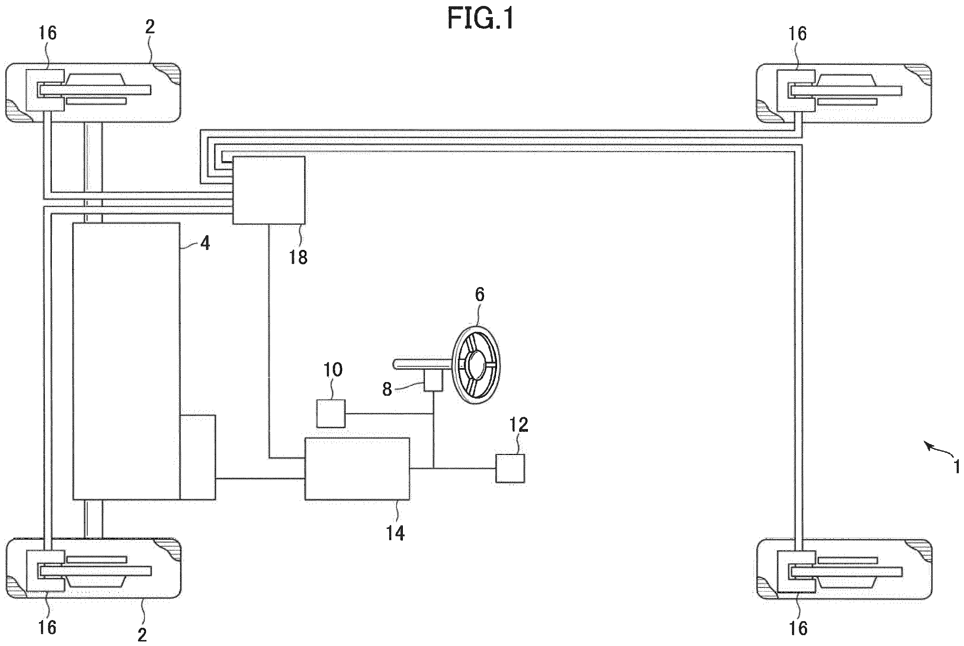

First of all, a vehicle equipped with the vehicle behavior control device according to this embodiment will be described based on FIG. 1. FIG. 1 is a block diagram depicting an overall configuration of the vehicle equipped with the vehicle behavior control device according to this embodiment.

In FIG. 1, the reference sign 1 indicates the vehicle equipped with the vehicle behavior control device according to this embodiment. The vehicle 1 has a vehicle body with a front portion to which a drive control system 4 for driving drive road wheels 2 (in the embodiment depicted in FIG. 1, a pair of right and left front road wheels among four road wheels) is mounted. As the drive control system 4, it is possible to use an internal combustion engine such as a gasoline engine or a diesel engine, and an electric motor. At least a part of the drive control system 4 functions as "drive means" and "drive controlling means" set forth in the appended claims, although details thereof will be described later.

The vehicle 1 is further equipped with: a steering angle sensor (steering angle detecting means) 8 for detecting a steering angle which is a rotational angle of a steering shaft (not depicted) coupled to a steering wheel 6; a vehicle speed sensor 10 for detecting a vehicle speed; and a yaw rate sensor 12 for detecting a yaw rate. Each of these sensors is operable to output a detection value thereof to a PCM 14 (Power-train Control Module).

The vehicle 1 is further equipped with a brake control system 18 for supplying a brake fluid pressure to a wheel cylinder or a brake caliper of a brake unit (braking device) 16 installed in each of the four road wheels. The brake control system 18 is operable, based on a yaw moment command (corresponding to an aftermentioned target yaw moment) input from the PCM 14, to calculate fluid pressures to be supplied, respectively and independently, to the wheel cylinders or brake calipers in the respective road wheels, and control brake pumps according to the calculated fluid pressures. The brake control system 18 preliminarily stores therein a control map defining how much the respective fluid pressures of the brake units 16 in the respective road wheels should be raised according to a yaw moment command input thereinto. The brake control system 18 is operable, upon input of the yaw moment command from the PCM 14, to refer to the control map to control the brake pumps such that the fluid pressures to be supplied, respectively and independently, to the brake units 16 in the respective road wheels are raised according to the yaw moment command.

At least a part of the brake control system 18 functions as "braking means" and "brake controlling means" set forth in the appended claims, although details thereof will be described later.

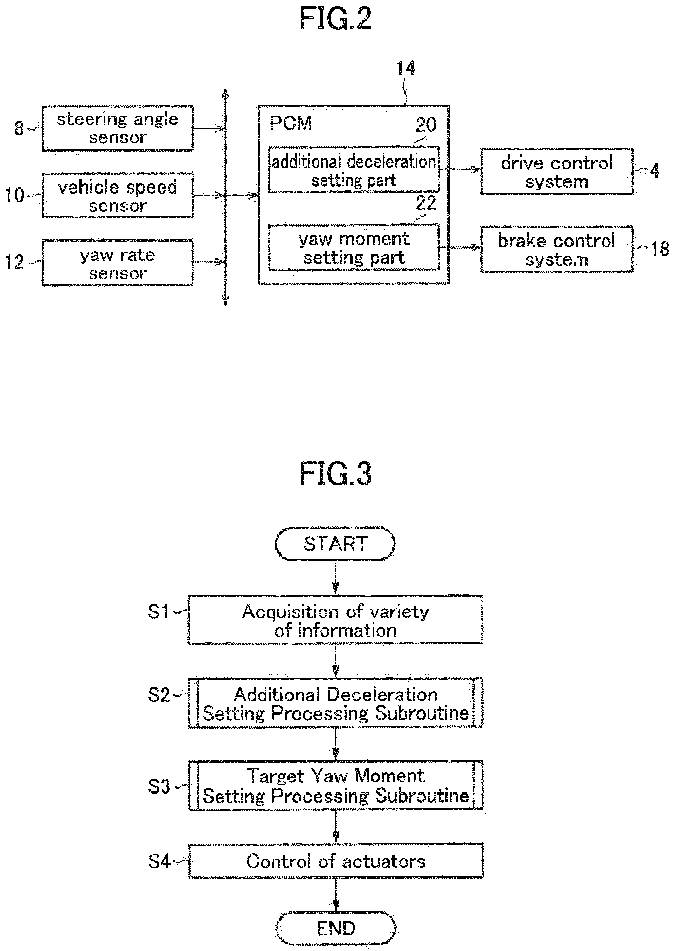

Next, with reference to FIG. 2, an electrical configuration of the vehicle behavior control device according to this embodiment will be described. FIG. 2 is a block diagram depicting the electrical configuration of the vehicle behavior control device according to this embodiment.

The PCM 14 is operable, based on the detection signals from the aforementioned sensors, and detection signals output from various sensors for detecting an operating state of the drive control system 4, to output control signals in order to perform control with respect to various sections (such as a throttle valve, a turbocharger, a variable valve mechanism, an ignition device, a fuel injection valve, an EGR device, and a battery state-of-charge regulator) of the drive control system 4.

The PCM 14 comprises an additional deceleration setting part 20 for setting an additional deceleration to be added to the vehicle 1 in association with a change in the steering angle, and a yaw moment setting part 22 for setting a target yaw moment to be applied to the vehicle 1 in association with a change in the steering angle.

These elements of the PCM 14 are composed of a computer which comprises: one or more processors; various programs (including a basic control program such as an OS, and an application program capable of being activated on the OS to realize a specific function) to be interpreted and executed by the one or more processors; and an internal memory such as ROM or RAM for storing therein the programs and a variety of data.

The PCM 14 functions as "target yaw moment setting means" and "drive controlling means" set forth in the appended claims, although details thereof will be described later.

Next, with reference to FIGS. 3 to 6, a processing routine to be executed by the vehicle behavior control device will be described.

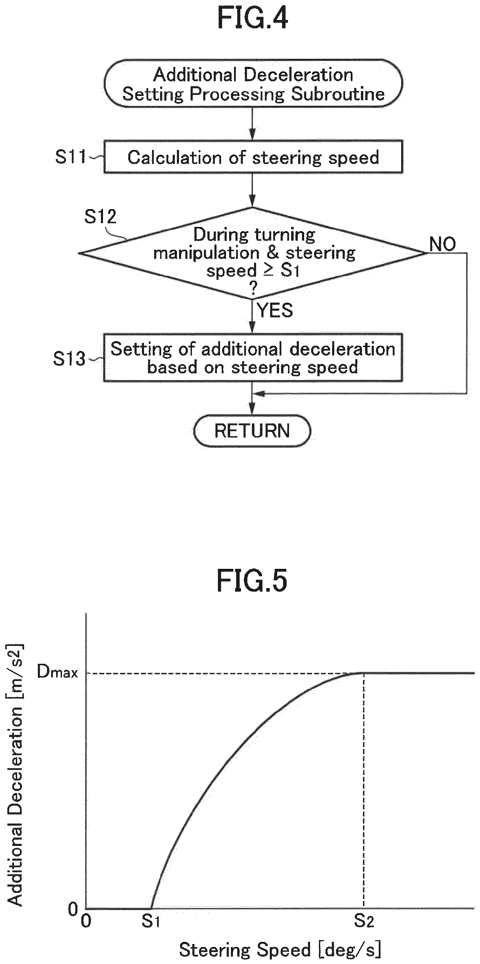

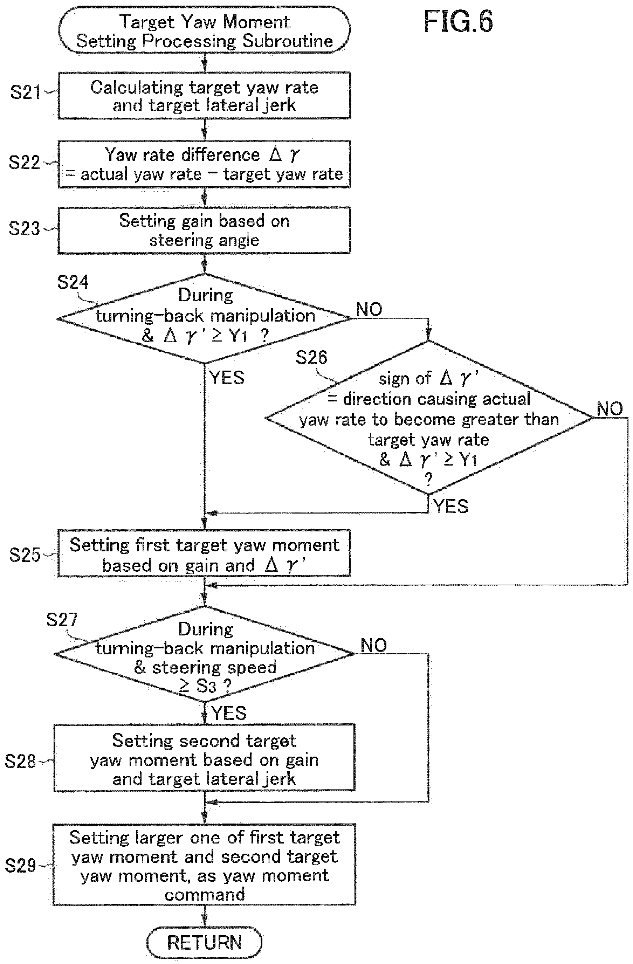

FIG. 3 is a flowchart of a behavior control processing routine to be executed by the vehicle behavior control device according to this embodiment, and FIG. 4 is a flowchart of an additional deceleration setting processing subroutine through which the vehicle behavior control device according to this embodiment sets the additional deceleration. FIG. 5 is a map indicating a relationship between a steering speed and the additional deceleration, and FIG. 6 is a flowchart of a target yaw moment setting processing subroutine through which the vehicle behavior control device according to this embodiment sets the target yaw moment. The map depicted in FIG. 5 is preliminarily created and stored in a memory or the like.

The behavior control processing routine depicted in FIG. 3 is activated when an ignition switch of the vehicle 1 is turned on and thus electric power is applied to the vehicle behavior control device, and repeatedly executed with a given period (e.g., 50 ms).

As depicted in FIG. 3, upon start of the behavior control processing routine, the PCM 14 operates, in Step 1, to acquire a variety of information of the vehicle 1. Specifically, the PCM 14 operates top acquire detection signals output from the aforementioned various sensors, including the steering angle detected by the steering angle sensor 8, the vehicle speed detected by the vehicle speed sensor 10, and the yaw rate detected by the yaw rate sensor 12.

Subsequently, in step S2, the additional deceleration setting part 20 of the PCM 14 operates to execute the additional deceleration setting processing subroutine to set an additional deceleration to be added to the vehicle 1.

Then, in step S3, the yaw moment setting part 22 of the PCM 14 operates to execute the target yaw moment setting processing subroutine to set a target yaw moment to be added to the vehicle 1.

Subsequently, in step S4, the PCM 14 operates to control an actuator (an electric motor, actuators in a fuel injection system, an ignition system, intake and exhaust systems, etc., of an engine, or the like) to add the additional deceleration set in the step S2, to the vehicle 1 via the drive control system 4. Specifically, the PCM 14 operates to reduce an output torque of the engine or electric motor so as to add the set additional deceleration to the vehicle 1. The control to be performed by the PCM 14 via the drive control system 4 is equivalent to the aforementioned "first control".

Further, in the step S4, the PCM 14 operates to control an actuator (brake pumps or the like) to add the target yaw moment set in the step S3, to the vehicle 1 via the brake control system 18. For example, the PCM 14 preliminarily stores therein a map defining a relationship between the yaw moment command and a rotational speed of each of the brake pumps, and operates to adjust respective braking forces of the road wheels by referring to this map to control the brake pumps such that they operate at respective rotational speeds corresponding to the yaw moment command set through the target yaw moment setting processing subroutine in the step S3, while individually controlling valve units each provided in a fluid pressure supply line connected to a corresponding one of the brake units 16. The control to be performed by the PCM 14 via the brake control system 18 is equivalent to the aforementioned "second control".

After the step S4, the PCM 17 terminates one cycle of the behavior control processing routine.

Next, with reference to FIG. 4, the additional deceleration setting processing subroutine will be described.

As depicted in FIG. 4, upon start of the additional deceleration setting processing subroutine, the additional deceleration setting part 20 of the PCM 14 operates, in step S11, to calculate steering speed based on the steering angle acquired in the step S1 of the behavior control processing routine in FIG. 3.

Subsequently, in step S12, the additional deceleration setting part 20 operates to determine whether a turning manipulation of the steering wheel 6 is being performed (i.e., the steering angle (absolute value) is increasing), and the steering speed is equal to or greater than a given threshold S₁.

As a result, when the turning manipulation is being performed and the steering speed is equal to or greater than the threshold S₁, the subroutine proceeds to step S13. In the step S13, the additional deceleration setting part 20 operates to set an additional deceleration based on the steering speed. This additional deceleration means a deceleration to be added to the vehicle 1 in response to the steering manipulation, so as to accurately realize vehicle behavior intended by a driver.

Specifically, the additional deceleration setting part 20 operates to set the additional deceleration to a value corresponding to the steering speed calculated in the step S11, based on a relationship between the steering speed and the additional deceleration, indicated by a map depicted in FIG. 5

In FIG. 5, the horizontal axis represents the steering speed, and the vertical axis represents the additional deceleration. As depicted in FIG. 5, when the steering speed is less than the threshold S₁, a corresponding value of the additional deceleration is 0. That is, when the steering speed is less than the threshold S₁, the PCM 14 does not perform the control for adding a deceleration to the vehicle 1 based on the steering manipulation (specifically, reduction of the output torque of the engine or electric motor).

On the other hand, when that the steering speed is equal to or greater than the threshold S₁, a value of the additional deceleration corresponding to this steering speed gradually comes closer to a given upper limit value Dₘₐₓ as the steering speed becomes larger. That is, as the steering speed becomes larger, the additional deceleration gradually increases, and the rate of increase in the additional deceleration gradually decreases. This upper limit value Dₘₐₓ is set at a level that the driver does not feel control intervention even when the deceleration is added to the vehicle 1 in response to the steering manipulation (e.g., 0.5 m/s² ≒ 0.05 G).

Further, when the steering speed is equal to or greater than a threshold S₂ greater than the threshold S₁, the additional deceleration is maintained at the upper limit value Dₘₐₓ.

After the step S13, the additional deceleration setting part 20 terminates the additional deceleration setting processing subroutine and returns to the main routine.

On the other hand, in the step S12, when the turning manipulation of the steering wheel 6 is not being performed (i.e., the steering angle is constant or is decreasing), or the steering speed is less than the threshold S₁, the additional deceleration setting part 20 terminates the additional deceleration setting processing subroutine and returns to the main routine.

In the step S4 of the behavior control processing routine in FIG. 3, the PCM 14 operates to reduce the output torque of the engine or electric motor so as to realize the additional deceleration set through the additional deceleration setting processing subroutine based on the rate of increase in the steering angle via the drive control system 4. In this way, when the turning manipulation of the steering wheel 6 is performed, the output torque of the engine or electric motor can be reduced based on the steering speed during the turning manipulation, so as to increase a vertical load on the front road wheels, so that it is possible to control behavior of the vehicle 1 with good responsiveness with respect to the turning manipulation by the driver.

Next, with reference to FIG. 6, the target yaw moment setting processing subroutine will be described.

As depicted in FIG. 6, upon start of the target yaw moment setting processing subroutine, the yaw moment setting part 22 of the PCM 14 operates, in step S21, to calculate a target yaw rate and a target lateral jerk, based on the steering angle and the vehicle speed acquired in the step S1 of the behavior control processing routine in FIG. 3.

Specifically, the yaw moment setting part 22 operates to calculate the target yaw rate by multiplying the steering angle by a coefficient according to the vehicle speed. Further, the yaw moment setting part 22 operates to calculate the target lateral jerk by calculating a target lateral acceleration from the target yaw rate and the vehicle speed, and then temporally differentiating the target lateral acceleration.

Subsequently, in step S22, the yaw moment setting part 22 operates to calculate a difference (yaw rate difference) Δγ by subtracting the target yaw rate calculated in the step S21 from the yaw rate (actual yaw rate) detected by the yaw rate sensor 12 and acquired in the step S1 of the behavior control processing routine in FIG. 3.

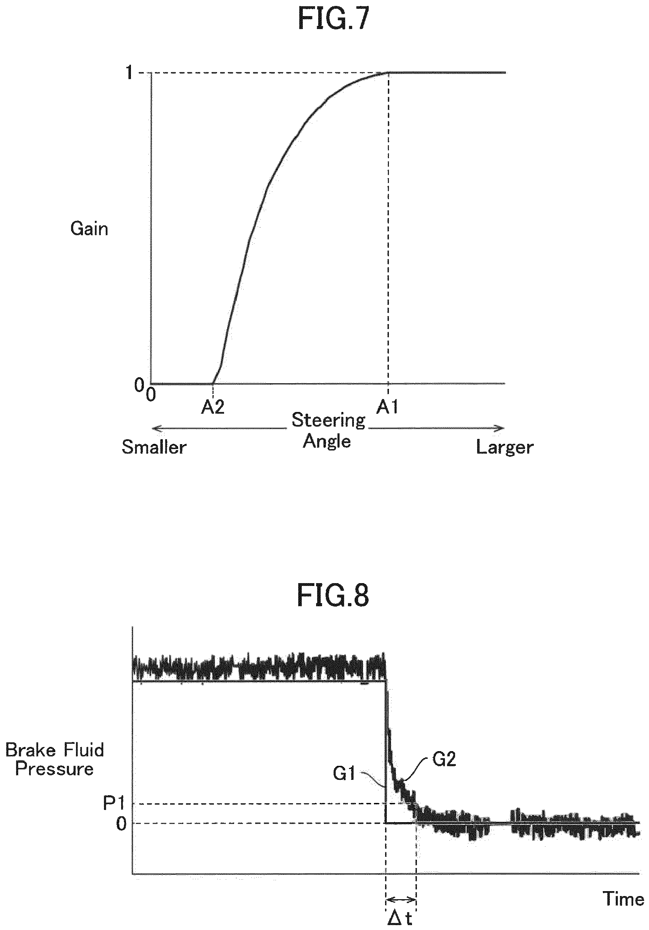

Subsequently, in step S23, the yaw moment setting part 22 operates to set a gain for use in setting the target yaw moment, based on the steering angle (which is used in the form of absolute value. This will also be applied to the following.). The setting of the gain will be specifically described with reference to FIGS. 7 and 8.

FIG. 7 is a map defining the gain for use in setting the target yaw moment in this embodiment. This map is preliminarily created and stored in a memory or the like. In FIG. 7, the horizontal axis represents the steering angle, and the vertical axis represents the gain. This gain is set to a value of 0 to 1 (0 ≤ gain ≤ 1), according to the steering angle, and used such that it is multiplied with respect to a reference value of the target yaw moment calculated by an aftermentioned method. That is, a value obtained by multiplying the reference value by the gain which is a value of 0 to 1 is used as a final value of the target yaw moment.

Specifically, as depicted in FIG. 7, (1) in a region where the steering angle is equal to or greater than a first given angle A1, the gain is set to 1, (2) in a region where the steering angle is in the range of a second given angle A2 (< the first given angle A1) to less than the first given angle A1, the gain is set such that it gradually decreases toward 0 as the steering angle becomes smaller, and (3) in a region where the steering angle is less than the second given angle A2, the gain is set to 0. In a case of using such a gain map, (1) in the region where the steering angle is equal to or greater than the first given angle A1, an original (reference) value of the target yaw moment is used, (2) in the region where the steering angle is in the range of the second given angle A2 to less than the first given angle A1, the target yaw moment gradually decreases toward 0, and (3) in the region where the steering angle is less than the second given angle A2, the target yaw moment is kept at 0. The yaw moment setting part 22 operates to read out the map stored in a memory, as depicted in FIG. 7, and acquire a value of the gain corresponding to a current value of the steering angle acquired in the step S1. Here, setting of the target yaw moment is basically performed during a turning-back manipulation of the steering wheel 6. Thus, the gain is gradually reduced from 1 to 0 along with a decrease in the steering angle due to the turning-back manipulation.

In the case of using the above gain map, when the steering angle is 0, the gain is set to 0, and thereby the target yaw moment is set to 0. Thus, when the steering manipulation is switched from the turning-back manipulation to the turning manipulation, i.e., when the steering angle changes across 0, during traveling along an S-shaped curve or the like, the application of the yaw moment to the vehicle 1 by the second control is terminated. This suppresses a situation where the second control is continued to be executed even after the steering angle has changed across 0, and thereby the first control is additionally executed in the state in which the second control is executed. Therefore, it is possible to suppress a situation where control intervention becomes excessive in the entire vehicle, resulting in giving the driver a feeling of strangeness.

Here, the suppression of the above excessive control intervention seems to be able to be realized by setting the gain to 0 immediately after the steering angle becomes 0. However, in this embodiment, the gain is set to 0 in the region where the steering angle is less than the second given angle A2 which is greater than 0. This reason will be described with reference to FIG. 8.

FIG. 8 is an explanatory diagram regarding a pressure reduction characteristic of brake fluid pressure in the brake unit 16. In FIG. 8, the horizontal axis represents time, and the vertical axis represents the brake fluid pressure in the brake unit 16. A graph G1 indicates a target brake fluid pressure (corresponding to a brake fluid pressure command (required value)), and a graph G2 indicates an actual brake fluid pressure during issuance of the target brake fluid pressure. Further, the brake fluid pressure at a point designated by the reference sign P1 means an ineffective fluid pressure in the brake caliper of the brake unit 16 (this ineffective fluid pressure will hereinafter be referred to just as "caliper ineffective fluid pressure"). When the brake fluid pressure is equal to or greater than the caliper ineffective fluid pressure PI, a braking force is applied to the road wheel by the brake unit 16. On the other hand, when the brake fluid pressure is less than the caliper ineffective fluid pressure PI, no braking force is applied to the road wheel by the brake unit 16. This caliper ineffective fluid pressure is determined by a sliding resistance of a brake piston inside the brake caliper, etc.

As depicted in FIG. 8, there is a response delay Δt between a time when a command to reduce the brake fluid pressure to 0 (i.e., a command to release the brake fluid pressure) is issued (see the graph G1) and a time when the brake fluid pressure is actually reduced to a value of less than the caliper ineffective fluid pressure PI (see the graph G2). That is, there is the response delay Δt between a time when a command to terminate the application of the braking force to the road wheel by the brake unit 16 and a time when the application of the braking force to the road wheel by the brake unit 16 is actually terminated. This is because there is a delay in reduction of the brake fluid pressure (pressure reduction delay) due to an orifice for suppressing pulsation, etc., and thereby it becomes impossible to release brake pads immediately after the issuance of the command, resulting in the occurrence of so-called brake drag phenomenon. For example, the above response delay Δt is about 0.2 seconds.

Due to the presence of such a response delay Δt, even if the gain is set to 0 immediately after the steering angle becomes 0, to set the target yaw moment to 0 (setting the target yaw moment is equivalent to issuing the command to reduce the brake fluid pressure to 0), there is a tendency that, when the steering angle becomes 0, the application of the braking force to the brake unit 16 is not promptly terminated, and thereby the application of the yaw moment to the vehicle 1 by the second control is not promptly terminated. Therefore, in this embodiment, with a view to making it possible to reliably terminate the application of the braking force by each of the brake units 16 when the steering angle becomes 0, the gain is set to 0 when the steering angle becomes less than second given angle A2 (> 0), as depicted in FIG. 7, to set the target yaw moment to 0. This means that, in anticipation of the pressure reduction delay in the brake fluid pressure due to an oil passage, etc., inside the brake unit 16, the command to reduce the brake fluid pressure to 0 is issued to the brake unit 16 at a time before the steering angle becomes 0. This makes it possible to reliably terminate clamping of the brake pads by the time when the steering angle becomes 0. That is, by the time when the steering angle becomes 0, the application of the braking force by each of the brake units 16 can be terminated so as to reliably terminate the application of the yaw moment to the vehicle 1 by the second control.

Here, a value of the steering angle to be used as the second given angle A2 is set such that the clamping of the brake pads can be reliably terminated when the steering angle becomes 0 after issuing the command to reduce the brake fluid pressure to 0, when the steering angle decreases to the second given angle A2. Specifically, the second given angle A2 is set through simulation, a given calculation formula, an experimental test, or the like, while taking into account the pressure reduction characteristic of the brake fluid pressure in the brake unit 16, particularly the aforementioned caliper ineffective fluid pressure PI and response delay Δt, etc. For example, the second given angle A2 is set to about 20 degrees. On the other hand, the first given angle A1 is set to, e.g., about 60 degrees.

Returning to FIG. 6, the description about step S24 and subsequent steps will be restarted. In the step S24, the yaw moment setting part 22 operates to determine whether or not the turning-back manipulation of the steering wheel 6 is being performed (i.e., the steering angle (absolute value) is decreasing), and a yaw rate difference change rate Δγ' obtained by temporally differentiating the yaw rate difference Δγ is equal to or greater than a given threshold Y₁.

As a result, when the turning-back manipulation is being performed and the yaw rate difference change rate Δγ' is equal to or greater than the threshold Y₁, the subroutine proceeds to step S25. In the step S25, the yaw moment setting part 22 operates to set, based on the yaw rate difference change rate Δγ', and the gain set in the step S23, a yaw moment oriented in a direction opposite to that of the actual yaw rate of the vehicle 1, as a first target yaw moment. Specifically, the yaw moment setting part 22 operates to calculate a reference value (magnitude) of the first target yaw moment by multiplying the yaw rate difference change rate Δγ' by a given coefficient Cₘ₁, and then calculate a final value (magnitude) of the first target yaw moment to be applied to the vehicle 1, by further multiplying the reference value of the first target yaw moment by the gain.

On the other hand, as a result of the determination in the step S24, when the turning-back manipulation of the steering wheel 6 is not being performed (i.e., the steering angle is constant or is increasing), the subroutine proceeds to step S26. In the step S26, the yaw moment setting part 22 operates to determine whether or not the yaw rate difference change rate Δγ' is changing in a direction causing the actual yaw rate to become greater than the target yaw rate (i.e., in a direction causing behavior of the vehicle 1 to exhibit an oversteer tendency), and the yaw rate difference change rate Δγ' is equal to or greater than the threshold Y₁. Specifically, when the yaw rate difference is decreasing in a situation where the target yaw rate is equal to or greater than the actual yaw rate, or when the yaw rate difference is increasing in a situation where the target yaw rate is less than the actual yaw rate, the yaw moment setting part 22 operates to determine that the yaw rate difference change rate Δγ' is changing in the direction causing the actual yaw rate to become greater than the target yaw rate.

As a result, when the yaw rate difference change rate Δγ' is changing in the direction causing the actual yaw rate to become greater than the target yaw rate, and the yaw rate difference change rate Δγ' is equal to or greater than the threshold Y₁, the subroutine proceeds to the step S25. In the step S25, the yaw moment setting part 22 operates to set, based on the yaw rate difference change rate Δγ', and the gain set in the step S23, a yaw moment oriented in a direction opposite to that of the actual yaw rate of the vehicle 1, as the first target yaw moment, in the same manner as that described above.

After the step S25, or, as a result of the determination in the step S26, when the yaw rate difference change rate Δγ' is not changing in the direction causing the actual yaw rate to become greater than the target yaw rate, or the yaw rate difference change rate Δγ' is less than the threshold Y₁, the subroutine proceeds to step S27. In the step S27, the yaw moment setting part 22 operates to determine whether or not the turning-back manipulation of the steering wheel 6 is being performed (i.e., the steering angle (absolute value) is decreasing), and the steering speed is equal to or greater than a given threshold S₃.

As a result, when the turning-back manipulation is being performed, and the steering speed is equal to or greater than a given threshold S₃, the subroutine proceeds to step S28. In the step S28, the yaw moment setting part 22 operates to set, based on the target lateral jerk calculated in the step S21 and the gain set in the step S23, a yaw moment oriented in a direction opposite to that of the actual yaw rate of the vehicle 1, as a second target yaw moment.

Specifically, the yaw moment setting part 22 operates to calculate a reference value (magnitude) of the second target yaw moment by multiplying the target lateral jerk by a given coefficient Cₘ₂, and then calculate a final value (magnitude) of the second target yaw moment to be applied to the vehicle 1, by further multiplying the reference value of the second target yaw moment by the gain.

After the step S28, or, as a result of the determination in the step S27, when the turning-back manipulation of the steering wheel 6 is not being performed (i.e., the steering angle is constant or is increasing), or the steering speed is less than the given threshold S₃, the subroutine proceeds to step S29. In the step S29, the yaw moment setting part 22 operates to set a larger one of the first target yaw moment set in the step S25 and the second target yaw moment set in the step S28, as the yaw moment command.

After the step S29, the yaw moment setting part 22 terminates the target yaw moment setting processing subroutine and returns to the main routine.

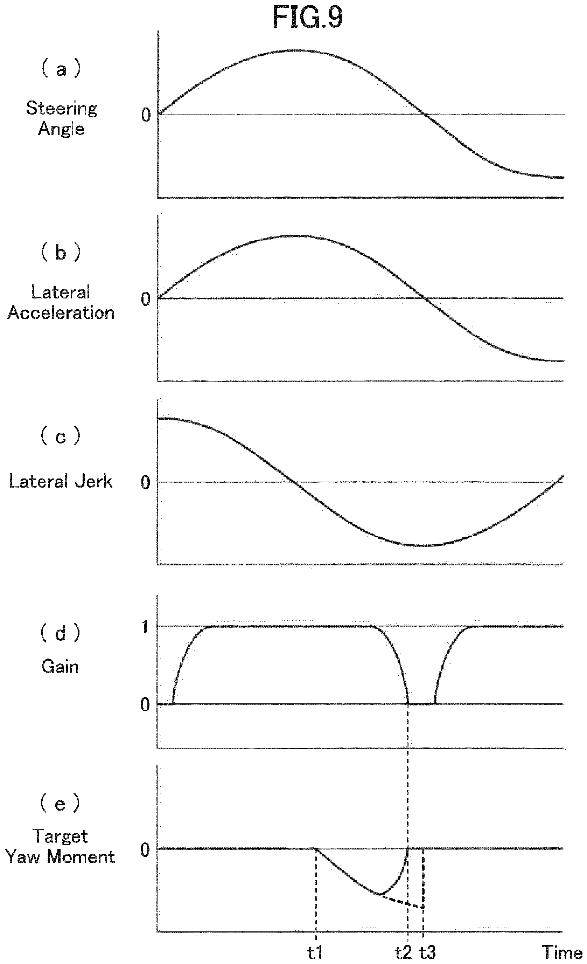

Next, with reference to FIG. 9, functions of the vehicle behavior control device according to this embodiment will be described.

FIG. 9 depicts time charts indicating temporal changes in various parameters pertaining to behavior control, as measured when the vehicle 1 equipped with the vehicle behavior control device according to this embodiment is driven along an S-shaped curve.

In FIG. 9, the charts (a), (b) and (c) indicate, respectively, the steering angle, the lateral acceleration, and the lateral jerk. The chart (d) indicates the gain for use in setting the target yaw moment, and the chart (e) indicates the target yaw moment (corresponding to the yaw moment command to be input from the PCM 14 into the brake control system 18). Particularly, in the chart (e), a target yaw moment obtained by using the gain indicated in the chart (d) is denoted by the solid line as a result of this embodiment, and a target yaw moment obtained without using the gain is denoted by the dashed line as a result of a comparative example for comparison with this embodiment.

As depicted in FIG. 9, after the steering manipulation is switched from the turning manipulation to the turning-back manipulation (see the chart (a)), the target yaw moment starts changing at time t1 (see the chart (e)). Specifically, at the time t1, the target yaw moment for the vehicle behavior control is set, and the second control of applying the yaw moment to the vehicle 1 is started. In a typical example, the condition that the steering manipulation is the turning-back manipulation, and the steering speed is equal to or greater than the threshold S₃ is satisfied (the step S27 in FIG. 6: YES), and the yaw moment setting part 22 operates to set the (second) target yaw moment based on the target lateral jerk (the step S28 in FIG. 6).

In the comparative example, the target yaw moment obtained without using the gain is directly used (see the dashed line in the chart (e)). In this comparative example, at time t3 when the steering angle becomes approximately 0 (e.g., a timing when the steering manipulation is determined not to be the turning-back manipulation), the target yaw moment is set to 0. Therefore, in the comparative example, when the steering angle becomes 0, the application of the braking force by each of the brake units 16 is not terminated, and thereby the application of the yaw moment to the vehicle 1 by the second control is not completed. As a result, in the comparative example, even after the steering angle changes across 0, i.e., after the steering manipulation is switched from the turning-back manipulation to the turning manipulation, the second control is continued to be executed, and thereby the first control is additionally executed in the state in which the second control is executed.

On the other hand, in this embodiment, the target yaw moment obtained by multiplying the target yaw moment in the comparative example by the gain according to the steering angle is used (see the solid lines in the charts (d) and (e)). In this embodiment, at time t2 before the steering angle becomes 0 (t2 < t3), specifically at a timing when the steering angle becomes less than the second given angle A2, the gain becomes 0, and thereby the target yaw moment is set to 0. Therefore, in this embodiment, by the time when the steering angle becomes 0, the application of the braking force by each of the brake units 16 is terminated so as to terminate the application of the yaw moment to the vehicle 1 by the second control. Thus, in this embodiment, after the steering angle changes across 0, i.e., after the steering manipulation is switched from the turning-back manipulation to the turning manipulation, the second control has already been terminated, so that a situation is suppressed in which the first control is additionally executed in the state in which the second control is executed.

Next, advantageous effects of the vehicle behavior control device according to this embodiment will be described.

In the vehicle behavior control device according to this embodiment, when the steering angle is 0, the target yaw moment is set to 0, so that, when the steering manipulation is switched from the turning-back manipulation to the turning manipulation, i.e., when the steering angle changes across 0, during traveling along an S-shaped curve or the like, the application of the yaw moment to the vehicle 1 by the second control can be adequately terminated. Therefore, it is possible to suppress a situation where the second control is continued to be executed even after the steering angle has changed across 0, and thereby the first control is additionally executed in the state in which the second control is executed. As a result, it is possible to suppress a situation where control intervention becomes excessive in the entire vehicle, resulting in giving a driver a feeling of strangeness.

Particularly, in the vehicle behavior control device according to this embodiment, when the steering angle is less than the second given angle A2 (> 0), the target yaw moment is set to 0, so that it is possible to reliably terminate the application of the braking force by each of the brake units 16 by the time when the steering angle becomes 0, irrespective of a response delay between a time when a command to terminate the application of the braking force by each of the brake units 16 is issued and a time when the application of the braking force is actually terminated, specifically, irrespective of a delay in reduction of the brake fluid pressure (pressure reduction delay) in each of the brake units 16. Therefore, it is possible to reliably terminate the second control of applying the yaw moment to the vehicle 1, by the time when the steering angle becomes 0, and effectively suppress the situation where the first control is additionally executed in the state in which the second control is executed, after the steering angle has changed across 9.

In this embodiment, when the steering angle is equal to or greater than the second given angle A2, the target yaw moment is gradually reduced toward 0, along with a decrease in the steering angle, so that it is possible to suppress a situation where, due to sudden stop of the application of the yaw moment to the vehicle 1, vehicle behavior is largely changed, resulting in giving the driver a feeling of strangeness.

In the vehicle behavior control device according to this embodiment, a reference value of the target yaw moment is set according to a value (such as a yaw rate, a steering speed, a lateral acceleration or a lateral jerk) obtainable based on the steering angle and representing a vehicle-turning state, and a final value of the target yaw moment obtained by multiplying the reference value of the target yaw moment by a gain according to the steering angle is used. This makes it possible to adequately attain the operation of terminating the second control when the steering angle is 0, without modifying a logic for setting the target yaw moment according to the value representing the vehicle-turning state and simply by additionally performing the processing of multiplying the reference value of the target yaw moment obtained through the logic by the gain. That is, termination of the application of the yaw moment to the vehicle can be attained reliably and simply.

In the vehicle behavior control device according to this embodiment, as the value representing the vehicle-turning state, it is possible to use a change rate of a difference between an actual yaw rate being actually generated in the vehicle 1 and a target yaw rate calculated based on the steering angle. In this case, for example, in a situation where the steering wheel is manipulated on a low-µ road such as a compacted snow road, a yaw moment oriented to suppress turning of the vehicle 1 can be applied to the vehicle 1 immediately in response to a rapid change in the yaw rate difference due to a response delay of the actual yaw rate, so that it is possible to quickly stabilize the vehicle behavior in response to the steering manipulation by the driver, before the vehicle behavior becomes unstable.

In the vehicle behavior control device according to this embodiment, as the value representing the vehicle-turning state, it is possible to use a steering speed calculated based on the steering angle. In this case, a yaw moment having a magnitude according to the speed of the steering manipulation by the driver can be applied to the vehicle 1 in a direction enabling the yaw moment to suppress turning of the vehicle 1, so that it is possible to quickly stabilize the vehicle behavior in response to the steering manipulation by the driver.

Next, some modifications of the above embodiment will be described.

The map defining the (see FIG. 7) is not limited to a fixed map, but may be changed according to any of various parameters. For example, the relationship between the steering angle and the gain defined in the map may be changed according to the vehicle speed.

In the above embodiment, when the steering angle is less than the second given angle A2 which is greater than 0, the target yaw moment is set to 0. Alternatively, the gain may be set to 0 only when the steering angle becomes 0. In other words, only when the steering angle becomes 0, the target yaw moment may be set to 0, without setting the target yaw moment to 0 when the steering angle is greater than 0. Preferably, the target yaw moment is set to 0 when the steering angle is less than the second given angle A2, as in the above embodiment. However, even in this case where the gain is set to 0 only when the steering angle becomes 0, it is possible to sufficiently obtain the effect of suppressing excessive control intervention after the steering angle has changed across 0, as compared to the case where the target yaw moment is set without any consideration for the value of the steering angle.

The above embodiment has been described based on an example where a rotational angle of a steering shaft coupled to the steering wheel 6 is used as the steering angle. Alternatively, in place of or in combination with the rotational angle of the steering shaft, any of various state quantities (such as a rotational angle of a motor for adding an assist torque, or a displacement of a rack of a rack-and-pinion mechanism) in a steering system may be used.

### LIST OF REFERENCE SIGNS

- 1: vehicle
- 2: drive road wheels (front wheels)
- 4: drive control system
- 6: steering wheel
- 8: steering angle sensor (steering angle detecting means)
- 10: vehicle speed sensor
- 12: yaw rate sensor
- 14: PCM
- 16: brake units (braking device)
- 18: brake control system
- 20: additional deceleration setting part
- 22: yaw moment setting part

## Claims

1. A vehicle behavior control device including a drive means operable to output a torque for driving road wheels of the vehicle, and a braking means capable of applying different braking forces, respectively, to right and left road wheels of the vehicle, the vehicle behavior control device comprising:
a steering wheel configured to be manipulated by a driver;
a steering angle detecting means configured to detect a steering angle of the steering wheel;
a drive controlling means configured, when the steering angle is increasing, to set an additional deceleration to be added to the vehicle, and reduce the output torque of the drive means so as to attain the additional deceleration;
a target yaw moment setting means configured, when the steering angle is decreasing, to set a yaw moment oriented in a direction opposite to that of a yaw rate being generated in the vehicle, as a target yaw moment to be applied to the vehicle; and
a brake controlling means configured to control the braking means to apply the target yaw moment to the vehicle,
wherein, when the steering angle is 0, the target yaw moment setting means is configured to set the target yaw moment to 0 so as to terminate the application of the target yaw moment to the vehicle.

2. The vehicle behavior control device according to claim 1, wherein the target yaw moment setting means is configured to reduce the target yaw moment toward 0, along with a decrease in the steering angle.

3. The vehicle behavior control device according to claim 1 or 2,
wherein the target yaw moment setting means is configured to set a reference value regarding the target yaw moment according to a value representing a vehicle-turning state, which can be obtained based on the steering angle, and the target yaw moment setting means is configured to calculate the target yaw moment by multiplying the reference value by a gain according to the steering angle, so as to apply the target yaw moment to the vehicle, and
wherein a value of 1 or less according to the steering angle is set as the gain, and the gain becomes 0 when the steering angle is 0.

4. The vehicle behavior control device according to claim 3, wherein the value representing the vehicle-turning state is a change rate of a difference between an actual yaw rate being actually generated in the vehicle and a target yaw rate calculated based on the steering angle.

5. The vehicle behavior control device according to claim 3 or 4, wherein the value representing the vehicle-turning state is a steering speed calculated based on the steering angle.
